Europäisches Patentamt

European Patent Office

Office européen des brevets

(19)

(11) Veröffentlichungsnummer: **0 233 523 B1**

(12) # EUROPÄISCHE PATENTSCHRIFT

(45) Veröffentlichungstag der Patentschrift: **02.10.91**

(51) Int. Cl.⁵: **C01B 25/22**, C01B 25/01

(21) Anmeldenummer: **87101255.5**

(22) Anmeldetag: **29.01.87**

(54) Verfahren zur Herstellung von Rohphosphorsäure.

(30) Priorität: **17.02.86 DE 3604920**

(43) Veröffentlichungstag der Anmeldung:
**26.08.87 Patentblatt 87/35**

(45) Bekanntmachung des Hinweises auf die
Patenterteilung:
**02.10.91 Patentblatt 91/40**

(84) Benannte Vertragsstaaten:
**BE DE ES FR GB IT NL SE**

(56) Entgegenhaltungen:
**EP-B- 0 023 195**
**US-A- 3 511 604**

(73) Patentinhaber: **HOECHST AKTIENGESELL-**
**SCHAFT**
**Postfach 80 03 20**
**W-6230 Frankfurt am Main 80(DE)**

(72) Erfinder: **Schimmel, Günther, Dr.**
**Ehrenstrasse 16**
**W-5042 Erftstadt(DE)**
Erfinder: **Kolkmann, Friedrich, Dr.**
**Tiergartenstrasse 22e**
**W-5040 Brühl(DE)**
Erfinder: **Gradl, Reinhard, Dr.**
**Heimbacher Weg 27**
**W-5042 Erftstadt(DE)**
Erfinder: **Ressel, Herbert Dr.**
**Am Kapellenbusch 29**
**W-5042 Erftstadt(DE)**

**Beschreibung**

Die vorliegende Erfindung betrifft ein Verfahren zur Herstellung von Rohphosphorsäure durch Aufschluß von sulfidhaltigem Rohphosphaterz mit einer Mineralsäure, wobei dieser Aufschluß in einem geschlossenen System, bestehend aus Aufschlußreaktor, Filterzone und Abgaswäsche vorgenommen wird.

Die Herstellung von Phosphorsäure geschieht heutzutage üblicherweise durch Aufschluß von Rohphosphat mit einer Mineralsäure wie Schwefelsäure, Salzsäure oder Salpetersäure. Verfahren dieser Art sind allgemein und in großem Umfang bekannt. Dabei ist der Aufschluß mit Schwefelsäure am weitesten verbreitet.

Die Calcium-Phosphaterze weisen neben den Elementen Calcium und Phosphor eine große Palette an Nebenbestandteilen auf; so z.B. viele Metalle, Carbonate, Sulfate und vor allem das Fluorid aus dem Apatit $Ca_5(PO_4)_3F$.

Der Sulfidgehalt ist insbesondere in sog. calcinierten Rohphosphaten bemerkenswert hoch (bis 0,1 %). Eine Calcinierung von Erzen wird immer dann vorgenommen, wenn deren Qualität und $P_2O_5$-Konzentration durch Reduzierung des $CO_2$-Gehalts und des Gehalts an organischen Verunreinigungen erhöht werden soll. Offensichtlich findet dabei eine Reduktion des im Erz in höherer Wertigkeit vorhandenen Schwefels zu Sulfid-Schwefel statt.

Gerade die Calcinierung gewinnt aber zunehmend an Bedeutung, zum einen, weil durch sie die immer häufiger eingesetzten Erze mit niederen $P_2O_5$-Gehalten verbessert werden können, andererseits können aus calcinierten Erzen solche Naßphosphorsauren hergestellt werden, die verhältnismäßig leicht zu Reinphosphorsäuren oder technischen Phosphaten aufgearbeitet werden können.

Der Einsatz sulfidhaltiger Erze im Phosphataufschluß bereitet jedoch Probleme, da ein Teil des Sulfids in dem vorliegenden sauren Milieu zu Schwefelwasserstoff umgesetzt wird, welcher mit dem übrigen Abgas der Anlage ins Freie gelangt. Die üblicherweise sich an den Phosphataufschluß anschließende saure Waschstufe zur Entfernung von HF bzw. $SiF_4$ aus dem Abgas ist nicht in der Lage, $H_2S$ entscheidend zurückzuhalten.

Möglich sind z.B. eine zusätzliche Abgaswäsche mit Natronlauge unter Bildung von Natriumsulfidlösung oder auch mit Oxidationsmitteln wie $H_2O_2$ unter Bildung von Sulfat. In beiden Fällen wird ein großer Chemikalienüberschuß benötigt unter Erzeugung eines nicht erwünschten sulfid- oder sulfathaltigen Abwassers. Außerdem kommt hinzu, daß bei einer alkalischen Abgaswäsche große Mengen $CO_2$ aus dem Aufschlußgas und aus der Kühlluft mit absorbiert werden, was einerseits zu Alkaliverbrauch, andererseits zu Verkrustungen durch Bildung von Alkalicarbonat führt.

Die beim Aufschluß sulfidischer Phosphaterze auftretende Korrosion am Aufschlußreaktor kann nach der Arbeitsweise der US-A-3 511 604 durch einen Zusatz von Arsenverbindungen inhibiert werden.

Überraschenderweise wurde nun gefunden, daß man bei der Herstellung von Rohphosphorsäure durch Aufschluß von sulfidhaltigem Rohphosphaterz mit einer Mineralsäure in einem geschlossenen System, welches aus einem Aufschlußreaktor, einer Filterzone und einer Abgaswäsche besteht, die Nachteile der bekannten Arbeitsweisen vermeiden kann, wenn man entweder A) beim Aufschluß des Phosphaterzes oder B) in der Abgaswäsche lösliche Kupferverbindungen zusetzt und dann die entstandenen Kupfer-Sulfidniederschläge im Falle A) zusammen mit den übrigen, beim Aufschluß gebildeten Niederschläge abfiltriert und im Falle B) aus der Waschflüssigkeit abtrennt.

Es empfiehlt sich, die Kupferverbindung in höchstens stöchiometrischer Menge, bezogen auf die jeweils vorhandene Sulfidmenge einzusetzen.

Dabei kann man beispielsweise so vorgehen, daß man zusammen mit dem Phosphaterz eine Kupferverbindung, die vollständig unter den Aufschlußbedingungen löslich ist, in einer solchen Menge einbringt, wie dies in etwa stöchiometrisch der üblicherweise freigesetzten Menge an $H_2S$ entspricht. Das Kupfer kann aber auch z.B. in gelöster Form mit einer im Kreislauf geführten Waschphosphorsäure in den Reaktor eingebracht werden.

Geeignete Stoffe sind insbesondere die, in denen das Kupfer bereits in oxidierter, zweiwertiger Form vorliegt. Das kann z.B. ein leicht lösliches Kupfersalz wie etwa $CuSO_4$ sein oder auch ein nicht sulfidhaltiges, säurelösliches Kupfererz. Eine weitere vorteilhafte Verfahrensweise besteht darin, daß man das Kupfer in Form eines zweiten, höher kupferhaltigen Phosphaterzes einbringt, welches selbst kein Sulfid enthält. So kann durch Einsatz einer geeigneten Mischung zweier Phosphaterze, von denen eines sulfidhaltig ist und das andere nicht, eine $H_2S$-Emission unterdrückt werden.

Will man die Phosphorsäure anschließend nicht zu einer technischen Ware aufarbeiten, sondern z.B. als Düngemittelrohstoff verwenden, so kann u.U. die durch geringfügig überstöchiometrische Kupferdosierung entstehende Kontaminierung der Säure störend sein. Dabei besteht jedoch die Möglichkeit, dem zur Abgaswäsche verwendeten Waschwasser eine leicht lösliche Metall-Verbindung, z.B. Kupfersulfat, zuzuset-

zen. Im Kontakt mit $H_2S$ bildet sich im Waschwasser eine leicht filtrierbare Fällung von Kupfersulfid, welche beim Umpumpen über einen geeigneten Trennapparat, z.B. Filter oder Zentrifuge, in fester Form abgeschieden werden kann. Das verbrauchte Metall muß in regelmäßigen Abständen wieder dem Waschwasser zugefügt werden. Generell besteht auch die Möglichkeit, das abgetrennte Sulfid wieder zu einem löslichen Salz, wie dem Sulfat, aufzuarbeiten, um es rezyklieren zu können.

Steigt, z.B. bei Verwendung von $CuSO_4$, der Gehalt an freier Schwefelsäure im Waschwasser im Laufe der Zeit zu stark an, so muß dieses saure Wasser in einer Teilmenge ausgeschleust werden, z.B. als Waschwasser auf das Calciumsulfat-Filter oder auch direkt in den Aufschlußreaktor.

Ohne den Erfindungsgegenstand darauf beschränken zu wollen, soll die Erfindung anhand der folgenden Beispiele verdeutlicht werden: (Alle %-Angaben sind als Gewichtsprozent zu verstehen).

Beispiel 1 (Vergleichsbeispiel)

In einem gasdichten Aufschlußreaktor, versehen mit Gaseinleitungsrohr, Rührer, Tropftrichter und Rückflußkühler mit Gasableitung wurden 2480 g Phosphorsäure (technisch, 17 % $P_2O_5$) und 978 g Rohphosphat (Khouribga calciniert, 33,2 % $P_2O_5$, 0,035 % $S^{2-}$-Gehalt) bei 70° C vorgelegt.

Zu dieser Suspension wurden insgesamt 878 g Schwefelsäure (technisch, 96 % $H_2SO_4$) in einer solchen Weise dosiert, daß sich eine konstante Temperatur von 70° C + 2° C einstellte.

Die beim Aufschluß des Phosphates entwickelten Abgase wurden mit Hilfe eines kontinuierlich durch das Gaseinleitungsrohr in den Reaktorraum geführten Trägergasstromes von ca. 60 1/h Luft durch den Rückflußkühler in eine leere Gaswaschflasche und anschließend in ein System von Waschflaschen zur absorptiven Bestimmung des $H_2S$-Gehaltes des Abgases nach VDI-Richtlinie 3486, Blatt 1 geleitet.

Der Trägergasstrom wurde dabei durch Verwendung einer Membranpumpe, die saugseitig direkt hinter die Gaswaschflaschen geschaltet war, erzeugt.

Es wurden 93,4 mg Sulfid im Abgas gefunden (Spalte 5 in Tabelle 1); das entspricht einem Anteil von 27,3 % des im Rohphosphat enthaltenen Sulfid-Schwefels (Spalte 7).

Beispiel 2

Wie im Beispiel 1 wurde Khouribga-Phosphat aufgeschlossen. Erfindungsgemäß wurden der Suspension aber zusätzlich vor dem Beginn der Schwefelsäure-Dosierung 0,88 g $CuSO_4 \cdot 5\ H_2O$ (3,5 m Mol; entspr. 33 % der stöchiometrisch zur Bindung des gesamten, im Phosphat vorhandenen Suflid-Schwefels erforderlichen Cu-Menge) zugesetzt. Es wurden 0,1 mg Sulfid im Abgas gefunden. Nahezu der gesamte Sulfid-Schwefel verblieb danach in der Calciumsulfat-Suspension.

Beispiel 3 (Vergleichsbeispiel)

Wie in Beispiel 1 wurden 978 g Youssoufia-Rohphosphat (33,5 % $P_2O_5$, 0,059 % $S^{2-}$) mit Schwefelsäure aufgeschlossen.

Es wurden 210 mg Sulfid im Abgas gefunden (Spalte 5), das entspricht einem Anteil von 36,4 des im Rohphosphat enthaltenen Sulfid-Schwefels (Spalte 7).

Beispiel 4

Wie in Beispiel 3 wurde Youssoufia-Phosphat aufgeschlossen. Erfindungsgemäß wurden der Suspension aber zusätzlich vor dem Beginn der Schwefelsäure-Dosierung 2,25 g $CuSO_4 \cdot 5\ H_2O$ (9,0 m Mol; entspr. 50 % der stöchiometrisch benötigten Cu-Menge) zugesetzt.

Es wurden 8,4 mg Sulfid im Abgas gefunden (Spalte 5). Die Emission von $H_2S$ konnte also deutlich reduziert werden.

Beispiel 5

Wie im Beispiel 4 wurde Youssoufia-Phosphat unter Zusatz von $CuSO_4 \cdot 5\ H_2O$ aufgeschlossen, jedoch mit dem Unterschied, daß die Menge an $CuSO_4 \cdot 5\ H_2O$ verdoppelt wurde.

Es wurden 0,2 mg Sulfid im Abgas gefunden (Spalte 5). Die Emmission von $H_2S$ konnte also nahezu vollständig zurückgedrängt werden.

Beispiel 6 (Vergleichsbeispiel)

Unter Verwendung derselben Apparatur wie in Beispiel 1 beschrieben wurden 2482 g Phosphorsäure (42.2 % $P_2O_5$) und 489 g Youssoufia-Phosphat bei 95° C vorgelegt, und zu dieser Suspension wurden insgesamt 439 g Schwefelsäure in einer solchen Weise dosiert, daß sich eine konstante Temperatur von 95-98° C in der Maische einstellt. Die Abgase wurden wie in Beispiel 1 beschrieben behandelt. Es wurden 157,6 mg Sulfid im Abgas gefunden (Spalte 5), das entspricht einem Anteil von 54,6 % des im Rohphosphat enthaltenen Sulfid-Schwefels (Spalte 7).

Beispiel 7

Wie im Beispiel 6 wurde Youssoufia-Phosphat aufgeschlossen. Erfindungsgemäß wurden der Suspension aber zusätzlich vor dem Beginn der Schwefelsäure-Dosierung 1,58 g $CuSO_4 \cdot 5H_2O$ (6,3 m Mol; entspr. 70 % der stöchiometrisch erforderlichen Cu-Menge) zugesetzt.

Es wurden 32,4 mg Sulfid im Abgas gefunden (Spalte 5). Die Emission von $H_2S$ konnte also im Vergleich zu Beispiel 6 deutlich reduziert werden.

Beispiel 8

Wie in Beispiel 7 wurde Youssoufia-Phosphat unter Zusatz von $CuSO_4 \cdot 5 H_2O$ aufgeschlossen, jedoch mit dem Unterschied, daß die zugesetzte Menge an $CuSO_4 \cdot 5 H_2O$ auf 2,25 g (9 m Mol; entspr. 100 % der stöchiometrisch erforderlichen Cu-Menge) erhöht wurde.

Es wurden 5 mg Sulfid im Abgas gefunden. Die Emission von $H_2S$ konnte also nahezu vollständig zurückgedrängt werden.

Beispiel 9

Wie in Beispiel 3 wurde Youssoufia-Phosphat aufgeschlossen, jedoch mit dem Unterschied, daß die erste Gaswaschflasche nicht leer war, sondern 258 g einer Lösung von $CuSO_4 \cdot 5 H_2O$ in stark verdünnter Schwefelsäure (pH 2, 12,5 g Cu/g Lösung) enthielt.

In dem so behandelten Abgas wurden nur noch Spuren von $H_2S$ nachgewiesen.

Das in der Gaswaschflasche ausgefallene CuS konnte leicht über ein Druckfilter abgetrennt werden. Der bei 110° C getrocknete Rückstand wog 0,50 g.

TABELLE

| Spalte | 1 | 2 | 3 | 4 | 5 | 6 | 7 |
|---|---|---|---|---|---|---|---|
| Bei-spiel | Rohphosphat | Aufschluß-temperatur °C | Cu-Zusatz [Gew.-% bezogen auf Rohphosphat] | Cu-Zusatz [Mol-% bezogen auf Sulfidgehalt i. Rohphosphat] | H$_2$S-Emission [mg S$^{2-}$] | H$_2$S-Emission mg H$_2$S/kg Phosphat | Sulfidanteil im Abgas bez. auf Gehalt im Rohphosphat |
| 1 | Khouribga | 70 | - | - | 93,4 | 101,5 | 27,3 |
| 2 | | 70 | 0,022 | 33,0 | <0,1 | <0,1 | <0,01 |
| 3 | Youssoufia | 70 | - | - | 210,0 | 228,1 | 36,4 |
| 4 | | 70 | 0,059 | 50,0 | 49,6 | 53,9 | 8,6 |
| 5 | | 70 | 0,117 | 100,0 | 0,2 | 0,22 | 0,04 |
| 6 | Youssoufia | 95 - 98 | - | - | 157,6 | 342,5 | 54,6 |
| 7 | | 95 - 98 | 0,081 | 70,0 | 32,4 | 70,4 | 11,2 |
| 8 | | 95 - 98 | 0,117 | 100,0 | <5 | <10 | <1,7 |

**Patentansprüche**

1. Verfahren zur Herstellung von Rohphosphorsäure durch Aufschluß von sulfidhaltigem Rohphosphaterz mit einer Mineralsäure in einem geschlossenen System, bestehend aus Aufschlußreaktor, Filterzone und Abgaswäsche, dadurch gekennzeichnet, daß man entweder

    A) beim Aufschluß des Phosphaterzes oder

    B) in die Abgaswäsche lösliche Kupferverbindungen und dann die entstandenen Kupfer-Sulfidniederschläge

im Falle A) zusammen mit den übrigen, beim Aufschluß gebildeten Niederschlägen abfiltriert und

im Falle B) aus der Waschflüssigkeit abtrennt.

2. Verfahren nach Anspruch 1 dadurch gekennzeichnet, daß man die Kupferverbindung in höchstens stöchiometrischer Menge, bezogen auf die jeweils vorhandene Sulfidmenge einsetzt.

## Claims

1. A process for the preparation of crude phosphoric acid by digesting sulfide-containing crude phosphate ore using a mineral acid in a closed system comprising digestion reactor, filter zone and offgas scrubber, which comprises adding a soluble copper compound either

    A) during digestion of the phosphate ore or

    B) to the offgas scrubber, and then filtering off the resultant copper sulfide precipitates,

in case A) together with the other precipitates formed during digestion, and

in case B) separating the precipitates off from the washing liquid.

2. The process as claimed in claim 1, wherein the copper compound is employed in an at most stoichiometric amount, based on the amount of sulfide present in each case.

## Revendications

1. Procédé de fabrication d'acide phosphorique brut par attaque par un acide minéral d'un minerai de phosphate brut contenant du sulfure dans un système fermé consistant en un réacteur d'attaque, une zone de filtration et un lavage des gaz résiduaires, caractérisé en ce que l'on ajoute des composés du cuivre solubles

    A) lors de l'attaque du minerai de phosphate ou

    B) dans le lavage des gaz résiduaires, puis

dans le cas A) on sépare par filtration les précipités de sulfure de cuivre formés en même temps que les autres précipités formés lors de l'attaque et

dans le cas B) on sépare les précipités de sulfure de cuivre formés du liquide de lavage.

2. Procédé selon la revendication 1, caractérisé en ce que l'on utilise le composé du cuivre en une quantité au maximum stoechiométrique par rapport à la quantité de sulfure présente à chaque fois.